# EUROPEAN PATENT APPLICATION

(11) **EP 4 717 407 A1**
(43) Date of publication of application: **01.04.2026**
(21) Application number: 25204611.5
(22) Date of filing: 25.09.2025
(51) Int. Cl.: B25B 5/06, B25B 27/04, B25B 31/00, B25B 27/00

(54) **DEVICE FOR INSERTING A LEAK CONTROL PLUG INTO A LEAK, LEAK CONTROL PLUG NUT, AND METHOD FOR INSERTING A LEAK CONTROL PLUG IN A LEAK**

(30) Priority: 25.09.2024 NL 2038710
(71) Applicant: Al Obaedy, Mohammed, 9697XE Blijham (NL)
(72) Inventor: Al Obaedy, Mohammed, 9697XE Blijham (NL)
(74) Representative: Arnold & Siedsma

(57) **Abstract**

The present invention relates to a device for inserting a leak control plug into a leak, comprising:
- a frame comprising a frame tube that extends in a first direction;
- a gripping tube that is positioned in the frame tube and extends in the first direction, wherein the gripping tube has a gripping end that is provided with a gripping element that is configured to grip a leak control plug nut;
- a trigger device that is connected to the frame, wherein the trigger device comprises at least one trigger,
wherein the at least one trigger is operatively coupled to the gripping tube, such that a movement of the at least one trigger moves the gripping tube in a retracting direction, and wherein the gripping tube is rotatable arranged in the frame tube.

## Description

The present invention relates to device for inserting a leak control plug into a leak, a leak control plug nut, and method for inserting a leak control plug in a leak. A leak is an undesired opening that is provided in a tube, conduit, or container, which generally needs to be sealed to prevent outflow of a fluid out of the tube, conduit, or container.

A leak may be an undesired opening that is provided in a tube, conduit, or container, which generally needs to be sealed to prevent outflow of a fluid out of the tube, conduit, or container. The leak can be caused by an accident, for example the puncturing of the tube, conduit, or container. Leak control plugs are used to stop a leak from leaking fluid. Leak control plugs may have an elastic body that is pressed against the leak to prevent any fluid from exiting the opening. Normally, the leak control plug has a central rod provided with an outer thread, and a nut provided on the central rod to tightly secure the leak control plug in or against the leak.

A downside of the known leak control plugs is that the operator putting the leak control plug in the leak has to work very close to the leak itself. To effectively apply the leak control plug to the leak, the operator has to tighten the nut. For doing this, the operator has to move his hands, and subsequently the rest of his body and face, close to the leak. Especially in case the leak is in a tube, conduit, or container that contains dangerous fluids, such as inflammable or toxic fluids, the closing of the leak with the leak control plug may be dangerous.

It is an object for the present invention to obviate or at least reduce the abovementioned problems. In particular, it may be an object of the present invention to provide a device that increases the safety of applying a leak control plug to a leak.

This object is achieved by a device for inserting a leak control plug into a leak, comprising:
- a frame comprising a frame tube that extends in a first direction;
- a gripping tube that is positioned in the frame tube and extends in the first direction, wherein the gripping tube has a gripping end that is provided with a gripping element that is configured to grip a leak control plug nut;
- a trigger device that is connected to the frame, wherein the trigger device comprises at least one trigger,
   wherein the at least one trigger is operatively coupled to the gripping tube, such that a movement of the at least one trigger moves the gripping tube in a retracting direction, and wherein the gripping tube is rotatable arranged in the frame tube.

An advantage of the device is that an operator is able to insert the leak control plug in the leak from a distance. The operator is able to hold the device with the trigger device. Due to the frame tube and the gripping tube extending in a first direction, a distance between the hands of the operator, and thus also between the rest of this body, and the leak is maintained. Due to this increased distance the chance of getting hazardous fluids on their body or the inhalation of hazardous gasses from the leak is greatly reduced.

An advantage of the gripping tube being rotatably arranged in the frame tube is that the leak control plug nut can be rotated by rotation of the gripping tube. By rotating the leak control plug nut, the leak control plug nut can be threaded and thereby secured. In this way, the securing of the leak control plug with the leak control plug nut can be realized from a distance of the leak. This further improves the security of the present invention.

The application of a leak control plug with the present invention may be as follows. First a leak control plug will be inserted into the leak, until an elastic body of the leak control plug abuts the perimeter of the leak. Then the trigger of the trigger device is moved such that the gripping tube, and in consequence the leak control plug nut that is connected to the gripping end of the gripping tube, is moved in the retraction direction. The gripping tube then coaxially moves inside the frame tube, thus causing the frame tube to exert a force on the elastic body. This secures the elastic body tightly to the leak. Next, the gripping tube may be rotated such that the leak control plug nut is threaded towards the elastic body. When the leak control plug nut is threaded securely against the elastic body, the gripping tube may be rotated in the opposite direction such that the device can be removed from the leak control plug.

The trigger device may be formed such that the trigger device forms an integral part of frame. In that case, the trigger device only functionally differs from the frame.

The leak control plug nut is part of a leak control plug. The leak control plug nut is generally arranged around a central rod of the leak control plug. The central rod of the leak control plug may have an outward thread, while the leak control plug nut has a through-hole with an inward thread, wherein the outward thread of the central rod and the inward thread of the leak control plug are configured to cooperate.

In an embodiment the gripping element comprises at least one guide.

Due to the at least one guide the leak control plug nut can easily be attached to the gripping tube. Preferably, the guide starts from the end of the gripping tube and is directed, as seen in the retracting direction, to the right. In this way, protruding elements from the leak control plug nut can be inserted in the guide, the gripping tube can be rotated clockwise to bring the leak control plug nut towards the end of the guide. If the gripping tube is further rotated clockwise, the leak control plug nut can be screwed around the axis of the leak control plug, towards the elastic body.

In an embodiment the at least one guide comprises a part that extends at an angle with the first direction, wherein the angle preferably is in the range of 0-80 degrees, more preferably in the range of 20-60 degrees.

An advantage of the angle of the at least one guide is that the leak control plug nut can be attached to the gripping tube in an effective manner.

Optionally, the at least one guide comprises a further part, or a second part, that is connected to the part, which can be named first part, and that extends in a direction that is substantially perpendicular to the first direction. Optionally, the further part may extend in a direction with a component in the reversed retraction direction.

In an embodiment the at least one guide comprises three guides.

The three guides are preferably three separate guides. Each guide may start from the gripping end of the gripping tube, and may extend at the angle with respect to the first direction.

An advantage of the three guides is that the three guides can be arranged equidistantly from each other around the circumference of the gripping tube. In this way, the three guides provide a stable connection between the gripping tube and the leak control plug nut. In particular, the three guides achieve that the force applied during rotation of the gripping tube is evenly distributed. This prevents the chance of excessive forces on parts of the gripping tube and/or leak control plug nut during rotation.

In an embodiment wherein the gripping tube is positioned coaxially in the frame tube.

An advantage of the coaxial position of the gripping tube in the frame tube is that the gripping tube is fixed by the frame tube, thereby preventing the loss of

In an embodiment the first direction and the retracting direction are substantially parallel.

As the gripping tube may be coaxially positioned in the frame tube, the retracting direction may be parallel with the first direction. The retracting direction is in this embodiment parallel to the longitudinal axis of the gripping tube and/or the frame tube.

In an embodiment the gripping tube extends from the gripping end to a screw end, wherein the screw end is provided with a handle.

An advantage of the handle is that with the handle the operator can easily manually grip the gripping tube. This makes rotating of the gripping tube relative to the frame tube easier for the operator. This improves the handleability of the device according to the invention.

In an embodiment the device further comprises a locking mechanism for selectively locking the gripping tube from movement in the retracting direction.

In an embodiment the locking mechanism comprises a locking plate that cooperates with a spring.

An advantage of the locking mechanism is that it prevents the gripping tube from moving relative to the frame tube when the trigger of the trigger device is not acting on the gripping tube. This cooperation between the locking mechanism and the trigger device achieves an easy application of the leak control plug in the leak.

In an embodiment the trigger device comprises at least one bearing, preferably a linear bearing.

The trigger device may comprise a bearing at pivot point of the at least one trigger. Preferably, the trigger device comprises two bearings at the pivot point of the at least one trigger. Preferably, the two bearings are arranged at both sides of the trigger device, when seen in a longitudinal direction. Preferably, the bearing is arranged around the pivot shaft of the at least one trigger.

Additionally, or alternatively, there may be a bearing provided at the connection between the gripping tube and the trigger device. This bearing between the gripping tube and the trigger device may be a linear ball bearing.

An advantage of the bearing is that the movement between the moving parts is improved by making the movement smoother. The bearing reduces the friction between the moving parts. In case of the bearing being provided at the pivot point of the at least one trigger, the bearing reduces the friction between the pivot axis of the trigger and the rest of the trigger device. In case of the bearing provided at the connection between the gripping tube and the trigger device, the bearing reduces the friction between the gripping tube and the trigger device, for example when the griping tube is rotated.

In an embodiment the frame and/or the gripping tube are made of titanium.

The frame and/or the gripping tube being made of titanium has the advantage that the chance of corrosion of the frame and/or the gripping tube is reduced. Additionally, or alternatively, the frame and/or the gripping tube being made of titanium also has the advantage that the chance of sparks being created during application of the leak control plug at the leak is reduced. This reduces the chance of fire and/or explosions, and thus increases the safety of using the device according to the invention.

In an embodiment the trigger device is made of plastic, preferably carbon fibre reinforced plastic.

Plastic has the advantage that no sparks are created, which reduces the chance of fire and/or explosions, and thus increases the safety of using the device according to the invention.

The invention further relates to a leak control plug nut, wherein the leak control plug nut comprises:
- a body that comprises an outer surface and extends in a longitudinal direction;
- a through hole that extends in the longitudinal direction of the body, wherein the through hole is provided with an inner thread; and
- at least one protruding element that is arranged on the outer surface of the body and extends outwardly, wherein the at least one protruding element is configured to be placed in a gripping element of a gripping tube of a device for inserting a leak control plug into a leak.

The leak control plug nut has the advantage that it can cooperate with the device for inserting a leak control plug into a leak. In particular, the at least one protruding element can cooperate with the gripping element of the gripping tube. For example, the at least one protruding element may be attached to the gripping element. In an example, this may be embodied as the at least one protruding element being inserted into a guide.

In an embodiment the at least one protruding element is a pin.

A pin provides an easy and effective protruding element that can be inserted and thereby attached to the gripping element, in particular if the gripping element is embodied as a guide.

In an embodiment the at least one protruding element comprises three protruding elements that are preferably placed equidistantly on the outer surface.

An advantage of the three protruding elements is that the three protruding elements can be arranged equidistantly from each other around the circumference of the leak control plug nut. In this way, the three protruding elements provide a stable connection between the gripping tube and the leak control plug nut. In particular, the three protruding elements achieve that the force applied during rotation of the gripping tube is evenly distributed. This prevents the chance of excessive forces on parts of the gripping tube and/or leak control plug nut during rotation.

In an embodiment the body is cylindrically shaped, and wherein the longitudinal direction is an axial direction.

The invention further relates to a system for inserting a leak control plug in a leak, wherein the system comprises:
- a device according the invention; and
- a leak control plug nut according to the invention.

The system provides similar effects and advantages as disclosed for the device and the leak control plug nut. All the elements described for the device and the leak control plug nut may be applied, either separately or in combination, to the system.

The invention further relates to a method for inserting a leak control plug in a leak, wherein the method comprises:
- providing a device according to the invention;
- inserting the at least one protruding element of a leak control plug nut in the gripping element of the device, wherein the leak control plug nut is threadedly connected to an axis of a leak control plug;
- inserting the leak control plug in the leak of an object;
- pulling the trigger such that the gripping tube is moved in the retracting direction; and
- rotating the gripping tube such that the leak control plug nut is threaded towards the leak.

The method provides similar effects and advantages as disclosed for the device, the leak control plug nut and the system. All the elements described for the device, the leak control plug nut and the system may be applied, either separately or in combination, to the method.

Further advantages, features and details are elucidated on the basis of preferred embodiments thereof, wherein reference is made to the accompanying drawings, wherein:
- figure 1, a perspective view of a device according to the invention;
- figure 2, a cross section of a device according to the invention;
- figure 3A, a perspective view of a first step of applying a leak control plug to a leak;
- figure 3B, a perspective view of a second step of applying a leak control plug to a leak;
- figure 4, a detailed view of a part of the device according to the invention;
- figure 5A, a perspective view of a leak control plug nut according to the invention; and
- figure 5B, a top view of a leak control plug nut according to the invention.

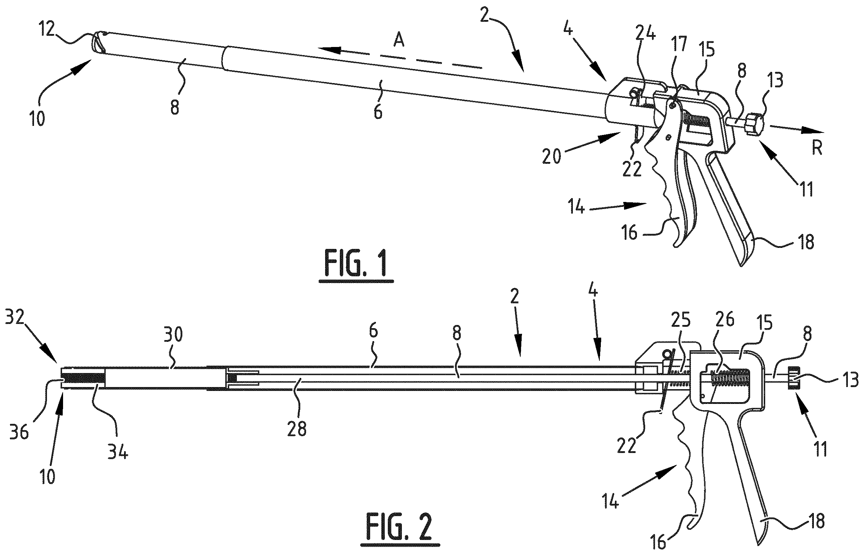

Device 2 (figure 1) comprises frame 4. Frame 4 is provided with frame tube 6. Frame tube 6 is in this illustrated embodiment cylindrical. Frame tube 6 extends in first direction A, which means in this illustrated embodiment that axis of frame tube 6 is parallel to first direction A. Provided inside frame tube 6 is gripping tube 8. Gripping tube 8 is arranged coaxially inside frame tube 6. Gripping tube 8 is in this illustrated embodiment also cylindrical. Gripping tube 8 stretching out from gripping end 10 towards screw end 11. At gripping end 10 gripping elements 12 are provided in gripping tube 8. Gripping elements 12 are, in this illustrated embodiment, guides. At screw end 11 gripping tube 8 is provided with screw knob 13. Screw knob 13 has a cylindrical design with a diameter that is bigger than gripping tube 8. Furthermore provided on the outer wall of screw knob 13 are ridges to improve the grip an operator has on screw knob 13.

Trigger device 14 is connected to frame 6. Trigger device 14 comprises trigger 16 that is pivotally attached to trigger device housing 15 by means of pivot axis 17. Trigger 16 is operatively coupled to gripping tube 8 such that a movement of trigger 16 in retracting direction R moves gripping tube 8 in retracting direction R. Handle 18 is also attached to trigger device housing 15 and is configured to receive the palm of the hand of the operator, such that the fingers of the hand of the operator can easily depress trigger 16 in retracting direction R.

Device 2 further comprises locking element 20 which comprises locking plate 22 and pivot axis 24 with which locking plate 22 is attached to trigger device housing 15. Locking plate 22 is biased, for example by a spring, to lock gripping tube 8 such that movement in retracting direction R of gripping tube 8 and/or rotation of gripping tube 8 is prevented. By moving locking plate 22 in retracting direction R, gripping tube 8 is free to move.

Gripping tube 8 (figure 2) is coaxially arranged in frame tube 8. Frame tube 8 comprises two parts, rod-like part 28 and tube-like part 30. Rod-like part 28 and tube-like part 30 are connected to each other. Tube-like part 30 is provided with inner space 31 wherein leak control plug nut 32 can be arranged. Leak control plug nut 32 comprises leak control plug nut body 34 wherein through bore 36 is arranged. As leak control plug nut body 34 is cylindrically shaped, through bore 36 is parallel to, or even coincides, with the axis of leak control plug nut body 34.

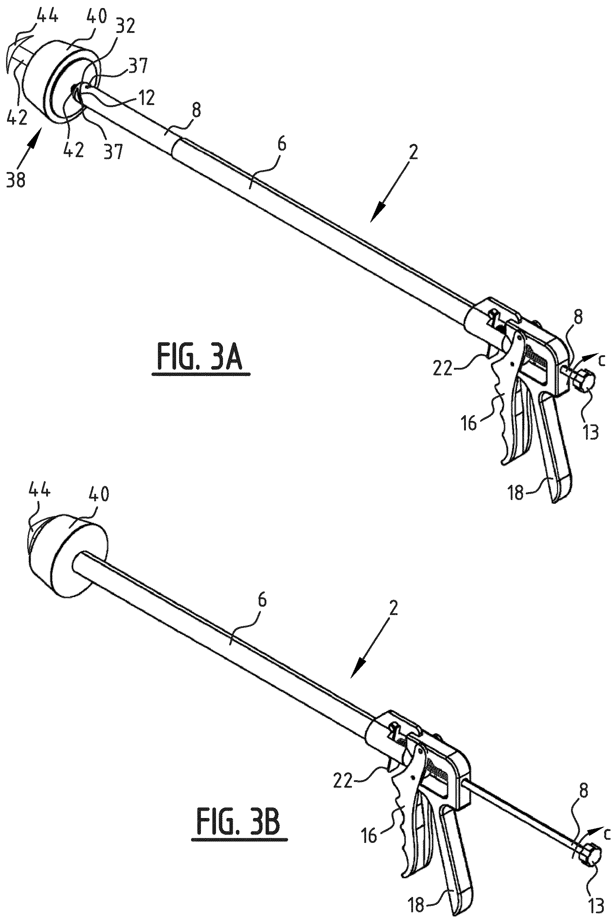

Griping tube 8 (figure 3A) is attached to leak control plug 38. Leak control plug 38 comprises elastic body 40 and central rod 42. At the end of central rod 42 hook 44 is provided. Central rod 42 comprises an outer thread on which leak control plug nut 32 is attached. Hook 44 may be inserted into the leak. Leak control plug 38 may close the leak by hook 44 being inside the tube, conduit, or container and elastic body 40 being pressed against the outside of the tube, conduit or container. In this way, elastic body 40 prevents fluids or gasses from exiting the leak.

Leak control plug nut 32 (not shown in figure 3A, as it is positioned mainly inside gripping tube 8) is connected to gripping tube 8 via pins 46 being arranged in guides 12. When hook 44 is positioned inside the leak, trigger 16 is moved in retraction direction R to move gripping tube 8 in retraction direction R relative to frame tube 6. In this way, the end of frame tube 6 moves towards elastic body 40.

After moving gripping end 10 (figure 3B) of gripping tube 8 completely inside frame tube 6 due to multiple repeated movements of trigger 16 in retraction direction R, frame tube 6 pushes elastic body 40 towards hook 44. In this way, elastic body 40 is pushed tightly towards hook 44 with the wall of the tube, conduit, or container in between.

Next, locking plate 22 may be moved in retracting direction R such that gripping tube 8 is free to rotate. Then the operator may grab screw knob 13 to rotate gripping tube 8 in clockwise direction. Due to gripping tube 8 still being connected to leak control plug nut 32, leak control plug nut 32 is also screwed in clockwise direction around central rod 42. In this way, leak control plug nut 32 is screwed towards elastic body 40. When leak control plug nut 32 is screwed against elastic body 40 of leak control plug 38, elastic body 40 is tightly secured against the outside wall of the tube, conduit, or container.

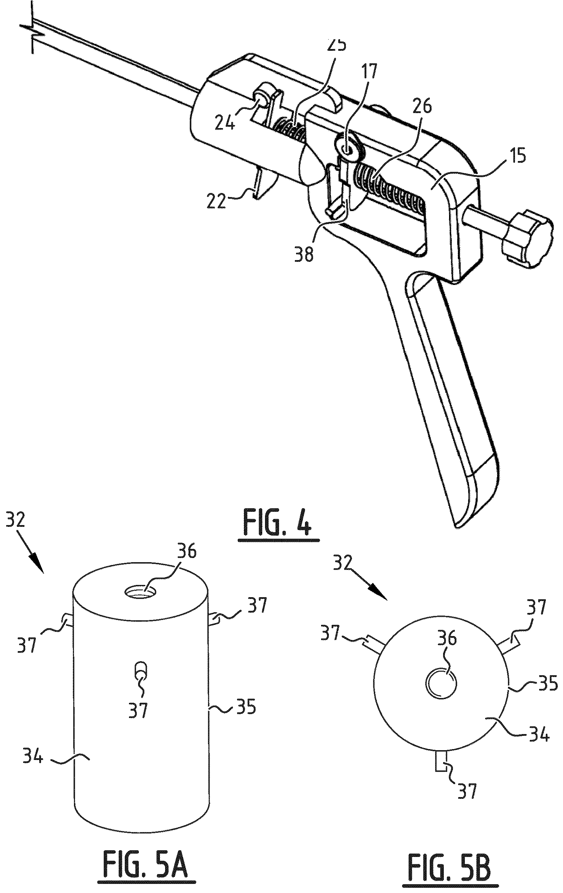

Gripping tube 8 (figure 4) is arranged through trigger device housing 15. Locking plate 24 is pivotally connected to trigger device housing 15 by means of pivot axis 24. Locking spring 25 is positioned against locking plate 24 such that gripping tube 8 is locked from rotating and/or moving in rotating direction R. Further provided in trigger device housing 15 is trigger plate 38. Trigger plate 38 is pivotally attached to trigger device housing 15 by means of tigger pivot axis 17. Optionally, the trigger device comprises two bearings arranged at both sides of the trigger device, when seen in a longitudinal direction. Preferably, the bearings are arranged around pivot axis 17 of trigger 16.

Trigger plate 38 is operatively connected to trigger 16. If trigger 16 is moved in retracting direction R, due to the operative coupling between trigger plate 38 and trigger 16, also trigger plate 38 is moved in retracting direction R. Trigger plate 38 comprises an opening through which gripping tube 8 extends. When trigger plate 38 is moved in retracting direction R, the opening grabs onto gripping tube 8 and moves gripping tube 8 in retracting direction R. In this way, movement of trigger 16 moves gripping tube 8 in retracting direction R. Trigger spring 26 is configured to move trigger 16 back into its rest position after the movement of trigger 16 in retracting direction R. Optionally, a bearing, preferably a linear bearing, is provided in trigger device housing 15. The bearing is arranged such that gripping tube 8 moves coaxially through the bearing.

Leak control plug nut 32 (figures 5A-B) comprises leak control plug nut body 34 that is cylindrically shaped. Through the axis of leak control plug nut body 34 through bore 36 is provided. Through bore 36 comprises an inner thread which can cooperate with central rod 42 of leak control plug 38, wherein central rod 42 is provided with an outer thread. On outer surface 35 of leak control plug nut body 34 three protruding elements, in this illustrated embodiment embodied as pins 37, are positioned equidistantly. Pins 37 are configured to be arranged in guides 12 that are provided at gripping end 10 of gripping tube 8.

The present invention is by no means limited to the above described preferred embodiments thereof. The rights sought are defined by the following claims within the scope of which many modifications can be envisaged.

## Claims

1. Device for inserting a leak control plug into a leak, comprising:
- a frame comprising a frame tube that extends in a first direction;
- a gripping tube that is positioned in the frame tube and extends in the first direction, wherein the gripping tube has a gripping end that is provided with a gripping element that is configured to grip a leak control plug nut;
- a trigger device that is connected to the frame, wherein the trigger device comprises at least one trigger,
wherein the at least one trigger is operatively coupled to the gripping tube, such that a movement of the at least one trigger moves the gripping tube in a retracting direction, and wherein the gripping tube is rotatable arranged in the frame tube.

2. Device according to claim 2, wherein the gripping element comprises at least one guide.

3. Device according to claim 3, wherein the at least one guide comprises a first part that extends at an angle with the first direction, wherein the angle preferably is in the range of 0-80 degrees, more preferably in the range of 20-60 degrees.

4. Device according to claim 1, 2 or 3, wherein the at least one guide comprises three guides.

5. Device according to any one of the foregoing claims, wherein the gripping tube is positioned coaxially in the frame tube.

6. Device according to any one of the foregoing claims, wherein the first direction and the retracting direction are substantially parallel.

7. Device according to any one of the foregoing claims, wherein the gripping tube extends from the gripping end to a screw end, wherein the screw end is provided with a handle.

8. Device according to any one of the foregoing claims, wherein the device further comprises a locking mechanism for selectively locking the gripping tube from movement in the retracting direction.

9. Device according to any one of the foregoing claims, wherein the trigger device comprises at least one bearing, preferably a liner bearing.

10. Device according to any one of the foregoing claims, wherein the frame and/or the gripping tube are made of titanium.

11. Devic according to any one the foregoing claims, wherein the trigger device is made of plastic, preferably carbon fibre reinforced plastic.

12. Leak control plug nut, comprising:
- a body that comprises an outer surface and extends in a longitudinal direction;
- a through hole that extends in the longitudinal direction of the body, wherein the through hole is provided with an inner thread; and
- at least one protruding element that is arranged on the outer surface of the body and extends outwardly, wherein the at least one protruding element is configured to be placed in a gripping element of a gripping tube of a device for inserting a leak control plug into a leak.

13. Leak control plug nut according to claim 12, wherein the at least one protruding element is a pin, and/or wherein the at least one protruding element comprises three protruding elements that are preferably placed equidistantly on the outer surface, and/or wherein the body is cylindrically shaped, and wherein the longitudinal direction is an axial direction.

14. System for inserting a leak control plug in a leak, comprising:
- a device according to any one of the claims 1-11; and
- a leak control plug nut according to any one the claims 12 or 13.

15. Method for inserting a leak control plug in a leak, comprising:
- providing a device according to any one of the claims 1-11;
- inserting the at least one protruding element of a leak control plug nut according to any one of the claims 12 or 13 in the gripping element of the device, wherein the leak control plug nut is threadedly connected to an axis of a leak control plug;
- inserting the leak control plug in the leak of an object;
- pulling the trigger such that the gripping tube is moved in the retracting direction; and
- rotating the gripping tube such that the leak control plug nut is threaded towards the leak.
